# EUROPEAN PATENT SPECIFICATION

(11) **EP 2 557 615 B1**
(45) Date of publication and mention of the grant of the patent: **08.02.2017**
(21) Application number: 11006616.4
(22) Date of filing: 11.08.2011
(51) Int. Cl.: H01M 2/34, H01M 6/50, H01M 10/42, H01M 10/48, H01M 6/42

(54) **Battery pack for a vehicle**
Batteriepack für ein Fahrzeug
Bloc-batterie pour véhicule

(43) Date of publication of application: 13.02.2013
(73) Proprietor: Autoliv Development AB, 447 83 Vårgårda (SE)
(72) Inventor: Hjerpe, Erik, 42361 Torslanda (SE); Sturk, David, 44783 Vargarda (SE)
(74) Representative: Müller Verweyen

(56) References cited:
- EP-A1- 2 216 843
- WO-A2-2011/123808
- JP-A- 7 105 932
- US-A1- 2006 012 334

## Description

The invention relates to Rechargeable Energy Storage Systems (RESS), such as a battery pack for a battery pack, for a vehicle.

Vehicles that use electricity for their motive power, whether only partly like hybrid electric vehicles, or exclusively like full electric vehicles, receive their energy from one or more batteries or battery packs. Each battery pack usually comprises multiple battery cells.

In some cases it can be advantageous to sever the electrical connection to the battery or to battery packs. Especially in cases where the battery gets damaged and it might release its stored electric energy uncontrolled, a disconnection or termination of the battery can be advantageous.

So called "current interruption devices" (CIDs) are integrated into many Li-ion battery cell designs, and offer the possibility to automatically break the battery cell-internal circuit in case the pressure inside the battery cell significantly increases, which can be a sign of malfunction. The United States patent publication US 2010/0178539 A1 shows an example of such a pressure sensitive CID. Another example of a battery pack comprising CIDs can be found in the United States patent publication US 2011/0104529 A1, in the European patent applications EP 2 216 849 A1 and EP 2 216 843 A1 or in JP07105932.

However, there is still a need to further enhance the safety of battery packs. The size of RESS or battery packs and consequently the stored energy increases rapidly due to the high demand of electrical vehicles. As a consequence of these higher energy capacities, the hazard levels also increase and measures to ensure the safety of the passengers are of the utmost importance.

In line with this fact, it is the objective of the invention to provide safety solutions that will increase the safety of battery packs.

The invention solves this objective with the features of claim 1. A battery pack for a vehicle is provided, the battery pack comprising a plurality of battery cells, the battery cells comprising current interruption devices, the current interruption devices breaking the cell internal circuit inside the battery cells, in case of a pressure rise inside the battery cell, wherein the current interruption devices also break the cell internal circuit in case of a pressure rise outside the battery cell. Furthermore, the battery pack preferably comprises an inflator for generating pressurized gas inside the battery pack. The inflator preferably starts generating pressurized gas inside the battery pack if it is triggered by a signal. This generation of pressurized gas by the inflator causes the current interruption devices inside the battery pack to break the cell internal circuit due to the high pressure around the battery cells. The signal can originate from a crash detecting sensor somewhere inside the vehicle or from a battery cells CID that breaks the cell internal connection. Thus the inflator preferably starts generating pressurized gas inside the battery pack in case one current interruption device is triggered and thereby causes the break of the cell internal connections of other battery cells. The inflator provides means to initiate the safety measures inside the battery pack at any desired time and/or an automatic initiation.

This enhancement of the battery pack ensures that the CIDs do not only break the cell internal circuit inside the battery cells if the pressure inside the cells increases, but also in case the surrounding pressure increases, for example due to an collision or impact of the vehicle or in case the battery pack gets damaged.

The CID can be designed in various ways. The CID may, for example, comprise a conductible membrane. Upon rupture of the membrane, the electrical connection is severed.

The generation of pressurized gas inside the battery pack preferably triggers at least one current interruption device. Preferably all the cells inside the pack can be swiftly and easily disconnected. Furthermore the increase of pressure inside the battery pack may also increase the robustness of the battery pack against outside violence, for example in case of a crash situation.

The current interruption devices are preferably connected to a control unit, which is capable of detecting if one or more of the current interruption devices are being triggered. The control unit preferably triggers the inflator in case one or more of the current interruption devices are triggered and thus break the cell internal circuit or if it receives a crash signal. The control unit may also be programmed so that two or more current interruption devices have to have broken the cell internal circuit before the inflator is triggered.

The control unit can trigger the inflator if it gets a signal from another place, for example from collision sensors at a different place in the vehicle. Therefore the control unit is preferably connected to one or more collision sensors inside the vehicle and triggers the inflator in case a collision or impact is detected. A pressure sensor may also be positioned inside the battery pack to sense a pressure rise inside the battery pack. In case of a car accident, a deformation of the battery pack, which results in a sudden pressure rise in the battery pack, will be detectable by the control unit through the pressure sensor. The control unit can then trigger the inflator and thus initiate the safety measures for the battery pack if they are not already initiated.

In a preferred embodiment, the inflator is designed to decrease the amount of oxygen inside the battery pack upon discharging. This oxygen consumption during and after the inflation process, effectively decreases the possibility of fire or other oxygen-using hazardous reactions. A number of chemical or physical reactions, that reduce the oxygen inside the battery pack, are suited for this purpose; one preferred being a chemical reaction where the oxygen is chemically bound to form the molecule H2O2.

The described safety features allow for a disconnection of each individual cell. Known safety measures disconnect batteries on battery pack level or higher, whereas the described battery pack is capable of disconnecting the battery cells individually, on "cell level". With each cell being disconnected, the potential for hazardous reactions, especially the chances of a fire and/or an accidental discharge of energy are reduced.

In the following the invention shall be illustrated on the basis of preferred embodiments with reference to the accompanying drawing, wherein:

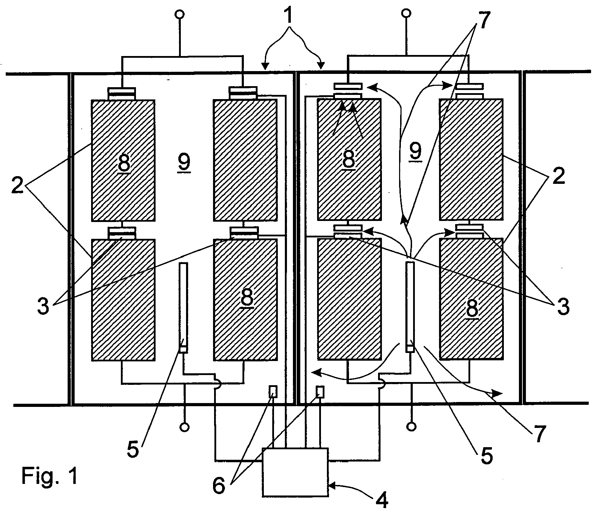

- Fig. 1: shows two neighboring battery packs with four battery cells each, the right battery cells with CIDs with broken cell internal circuit, the left with untriggered CIDs.

Figure 1 shows a schematic view of two neighboring battery packs 1. In this exemplary embodiment the battery packs 1 are installed in an automobile. Each battery pack 1 comprises four battery cells 2. Every battery cell 2 comprises a current interruption device (CID) 3. A control unit 4 is capable of monitoring the battery cells 2 and the current interruption devices 3. It is connected to all eight battery cells 2 (only four connections, two per battery pack 1, are shown for maintaining a clear view). An inflator 5 and pressure sensors 6 are positioned inside each battery pack 1.

As can be seen, the four current interruption devices 3 in the left battery pack 1 are in their untriggered state, the electrical connection being fully functional.

The other four current interruption devices 3 in the right battery pack 1 have already been triggered and thus broken their cell internal circuits.

The current interruption devices 3 are designed to interrupt the electrical connection either in response to an internal pressure 8 built up inside the battery cell 2, or due to external pressure 9 increase.

In one exemplary scenario the battery cell 2 in the left top corner of the right battery pack 1 malfunctions and pressure builds up inside, illustrated by the two arrows inside the battery cell 2. This increase of the internal pressure 8 triggers the current interruption device 3 once the internal pressure 8 exceeds a certain predetermined value.

Because the control unit 4 monitors the battery cells 2, it detects the current interruption and thus triggers the inflator 5. Upon the discharge of the inflator 5, the external pressure 9 inside the battery pack 1, around the battery cells 2, increases, and pressurized gas 7 is generated inside the battery pack 1. The increase in external pressure 9 triggers the three remaining current interruption devices 3, thus efficiently disconnecting all battery cells 2 inside the battery pack 1.

In another scenario, the right battery pack 1 is damaged due to a collision of the automobile. It deforms and pressure builds up inside the battery pack 1. This increase in pressure is detected by the control unit 4 through the pressure sensor 6. Immediately after the detection, the control unit 4 triggers the discharge of the inflator 5, the generated pressurized gas 7 helps to increase the robustness of the battery pack 1 and triggers the remaining current interruption devices 3.

It can also be advantageous to trigger the inflators 5 automatically in a crash situation, if damage to the battery pack 1 is detected, or sometimes even if no damage to the battery pack 1 is detected or imminent. The automated initiation can be achieved by using a crash signal, usually generated by a crash sensor at various places inside the automobile. The control unit 4 can be connected to these crash sensors, thus being able to immediately trigger the inflators 5 once a crash has been detected. Since crash and/or collision sensors are already in place in the automobile, no additional crash sensors are necessary.

The control unit 4 may automatically trigger the inflator 5 in a specific battery pack 1 or additionally in another or several neighboring battery packs 1, or even in all remaining battery packs 1 of the automobile. Especially in severe crashes, this measure can help to ensure the maximum safety for the passengers, since all battery cells 2 are disconnected at cell level.

### Reference list:

- 1: battery pack
- 2: battery cell
- 3: current interruption device
- 4: control unit
- 5: inflator
- 6: pressure sensor
- 7: pressurized gas
- 8: internal pressure
- 9: external pressure

## Claims

1. Battery pack (1) for a vehicle, the battery pack (1) comprising a plurality of battery cells (2), the battery cells (2) comprising current interruption devices (3), the current interruption devices (3) breaking the cell internal circuit inside the battery cells (2), in the case of a pressure rise inside the battery cell (2), wherein the current interruption devices (3) also break the cell internal circuit in the case of a pressure rise outside the battery cell (2), wherein the battery pack (1) comprises an inflator (5) for generating pressurized gas (7) inside the battery pack (1), wherein the inflator (5) starts generating pressurized gas (7) inside the battery pack (1) in the case where one current interruption device (3) is triggered, and wherein the control unit (4) triggers the inflator (5) in the case where one or more of the current interruption devices (3) breaks the cell internal circuit.

2. The battery pack (1) of claim 1, wherein the generation of pressurized gas (7) by the inflator (5) causes the current interruption devices (3) inside the battery pack (1) to break the cell internal circuit.

3. The battery pack (1) as claimed in any of the preceding claims, wherein the battery cells (2) and/or the current interruption devices (3) are connected to a control unit (4), which is capable of detecting if one or more of the current interruption devices (3) are being triggered.

4. The battery pack (1) as claimed in claim 3, wherein the control unit (4) is connected to one or more collision or pressure sensors (6) inside the vehicle.

5. The battery pack (1) of claim 4, wherein the control unit (4) triggers the inflator (5) in the case where a collision or impact is detected.

6. The battery pack (1) as claimed in any of the claims 1 to 5, wherein the inflator (5) decreases the amount of oxygen inside the battery pack (1) upon discharging.

## Patentansprüche

1. Batteriepack (1) für ein Fahrzeug, wobei der Batteriepack (1) eine Vielzahl von Batteriezellen (2) umfasst, wobei die Batteriezellen (2) Stromunterbrechungs-einrichtungen (3) umfassen, wobei die Stromunterbrechungseinrichtungen (3) den zellinneren Stromkreis in den Batteriezellen (2) im Fall eines Druckanstiegs in der Batteriezelle (2) unterbrechen, wobei die Stromunterbrechungseinrichtungen (3) den zellinneren Stromkreis auch im Fall eines Druckanstiegs außerhalb der Batteriezelle (2) unterbrechen, wobei der Batteriepack (1) einen Gasgenerator (5) zum Erzeugen von Druckgas (7) in dem Batteriepack (1) umfasst, wobei der Gasgenerator (5) mit der Erzeugung von Druckgas (7) in dem Batteriepack (1) beginnt, wenn eine Stromunterbrechungseinrichtung (3) ausgelöst wird, und wobei die Steuereinheit (4) den Gasgenerator (5) dann auslöst, wenn eine oder mehrere der Stromunterbrechungseinrichtungen (3) den zellinneren Stromkreis unterbrechen.

2. Batteriepack (1) nach Anspruch 1, wobei die Erzeugung von Druckgas (7) durch den Gasgenerator (5) bewirkt, dass die Stromunterbrechungseinrichtungen (3) in dem Batteriepack (1) den zellinneren Stromkreis unterbrechen.

3. Batteriepack (1) nach einem der vorhergehenden Ansprüche, wobei die Batteriezellen (2) und/oder die Stromunterbrechungseinrichtungen (3) mit einer Steuereinheit (4) verbunden sind, die in der Lage ist, zu erkennen, ob eine oder mehrere der Stromunterbrechungseinrichtungen (3) ausgelöst werden.

4. Batteriepack (1) nach Anspruch 3, wobei die Steuereinheit (4) mit einem oder mehreren Kollisions- oder Drucksensoren (6) im Fahrzeug verbunden ist.

5. Batteriepack (1) nach Anspruch 4, wobei die Steuereinheit (4) den Gasgenerator (5) dann auslöst, wenn ein Zusammenstoß oder Aufprall erfasst wird.

6. Batteriepack (1) nach einem der Ansprüche 1 bis 5, wobei der Gasgenerator (5) beim Entladen die Sauerstoffmenge in dem Batteriepack (1) verringert.

## Revendications

1. Bloc-batterie (1) pour véhicule, le bloc-batterie (1) comprenant une pluralité de cellules de batterie (2), les cellules de batterie (2) comprenant des dispositifs d'interruption du courant (3), les dispositifs d'interruption du courant (3) coupant le circuit interne de cellule à l'intérieur des cellules de batterie (2) en cas d'augmentation de la pression à l'intérieur de la cellule de batterie (2), dans lequel les dispositifs d'interruption du courant (3) coupent également le circuit interne de cellule en cas d'augmentation de la pression en dehors de la cellule de batterie (2), dans lequel le bloc-batterie (1) comprend un gonfleur (5) destiné à générer du gaz sous pression (7) à l'intérieur du bloc-batterie (1), dans lequel le gonfleur (5) commence à générer du gaz sous pression (7) à l'intérieur du bloc-batterie (1) dans le cas où un dispositif d'interruption de courant (3) est déclenché, et dans lequel l'unité de commande (4) déclenche le gonfleur (5) dans le cas où un ou plusieurs des dispositifs d'interruption de courant (3) coupent le circuit interne de cellule.

2. Bloc-batterie (1) selon la revendication 1, dans lequel la génération de gaz sous pression (7) par le gonfleur (5) amène les dispositifs d'interruption de courant (3) à l'intérieur du bloc-batterie (1) à couper le circuit interne de cellule.

3. Bloc-batterie (1) selon l'une quelconque des revendications précédentes, dans lequel les cellules de batterie (2) et/ou les dispositifs d'interruption de courant (3) sont raccordé(e)s à une unité de commande (4), qui est capable de détecter si un ou plusieurs des dispositifs d'interruption de courant (3) sont déclenchés.

4. Bloc-batterie (1) selon la revendication 3, dans lequel l'unité de commande (4) est raccordée à un ou plusieurs capteurs de collision ou de pression (6) à l'intérieur du véhicule.

5. Bloc-batterie (1) selon la revendication 4, dans lequel l'unité de commande (4) déclenche le gonfleur (5) dans le cas où une collision ou un impact est détecté(e).

6. Bloc-batterie (1) selon l'une quelconque des revendications 1 à 5, dans lequel le gonfleur (5) diminue la quantité d'oxygène à l'intérieur du bloc-batterie (1) lors de la décharge.
